# EUROPEAN PATENT SPECIFICATION

(11) **EP 0 289 221 B1**
(45) Date of publication and mention of the grant of the patent: **24.02.1993**
(21) Application number: 88303615.4
(22) Date of filing: 21.04.1988
(51) Int. Cl.: G11B 9/02

(54) **Electron beam addressible recording devices**
Aufzeichnungsvorrichtung, adressierbar mit einem Elektronenbündel
Dispositif d'enregistrement adressable par faisceau d'électrons

(30) Priority: 29.04.1987 JP 105766/87
(43) Date of publication of application: 02.11.1988
(73) Proprietor: SONY CORPORATION, Tokyo 141 (JP)
(72) Inventor: Murano, Kanji c/o Patents Division, Shinagawa-ku Tokyo 141 (JP); Miyaoka, Senri c/o Patents Division, Shinagawa-ku Tokyo 141 (JP)
(74) Representative: Thomas, Christopher Hugo

(56) References cited:
- WO-A-87/02481
- US-A- 2 922 986
- US-A- 3 170 083

## Description

This invention relates to electron beam addressible recording devices.

A variety of data recording devices are known including, for example, semiconductor memory devices, magnetic memory devices and optical memory devices.

A semiconductor memory device has a small recording capacity, of the order of megabits, with a relatively short access time of the order of microseconds. In comparison therewith, a magnetic memory device has a recording capacity of the order of 100 Mbits, but has a relatively long access time such as 10 milliseconds. An optical memory device may have a recording capacity as great as 1 gigabit, but its access time is longer than 100 milliseconds.

US patent specification US-A-3 170 083 discloses a memory device having features corresponding to those of the preamble of claim 1. International patent specification WO 87/02481 discloses a memory device comprising a dielectric material having a secondary electron emission characteristic greater than unity.

According to the present invention there is provided an electron beam addressible recording device comprising:
a recording layer formed of ferroelectric material;
an electrode disposed on one surface of said recording layer; and
potential setting means for setting the other surface of said recording layer at potentials corresponding to data to be recorded upon scanning said other surface by an electron beam;
characterized by:
said ferroelectric material having a secondary electron emissivity δ greater than unity; and
said potential setting means comprising a mesh electrode facing said other surface, and means selectively to apply potentials corresponding to said data to said mesh electrode whereby on scanning said other surface by said electron beam potential differences occur between said surfaces of said recording layer resulting in poling of said ferroelectric material in directions corresponding to said data.

The invention will now be described by way of example with reference to the accompanying drawings, throughout which like parts are referred to by like references, and in which:
Figure 1 shows the structure of an embodiment of recording device according to the present invention;
Figure 2 is an enlarged view of parts of the device of Figure 1;
Figure 3 is a characteristic curve of dielectric flux density plotted against an electric field; and
Figure 4 shows the structure of a target in a modified embodiment.

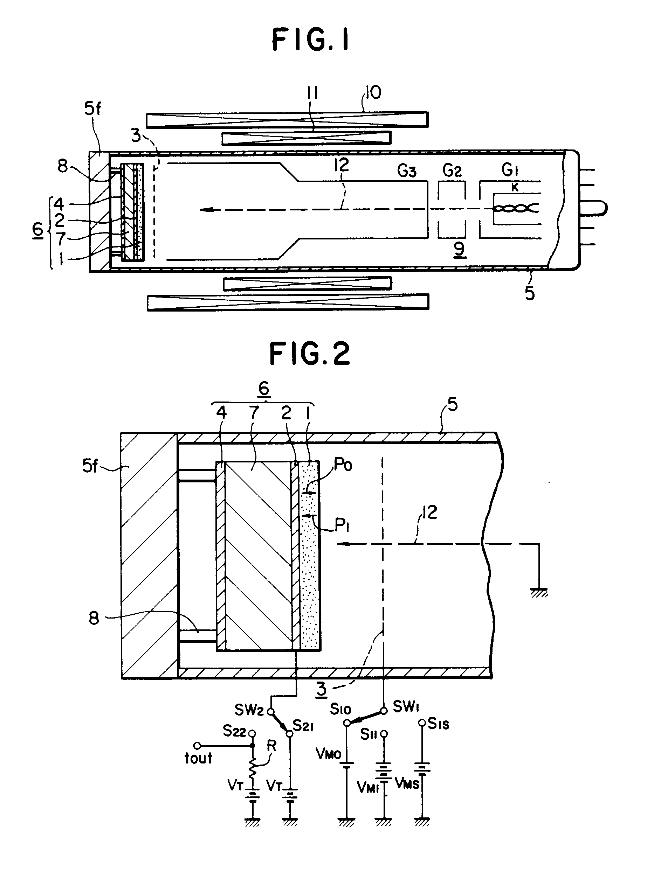

As shown in Figures 1 and 2, the embodiment of recording or memory device comprises a ferroelectric layer 1 having a secondary electron emissivity δ greater than unity, an electrode 2 disposed on one surface of the ferroelectric layer 1, potential setting means 3 disposed on the other surface side of the ferroelectric layer 1 and serving to set that surface at a predetermined potential by scanning it with an electron beam, and heating means 4 for heating the ferroelectric layer 1.

Two potentials, modulated in accordance with "0" and "1" of binary data to be recorded, are set by the potential setting means 3, and the data are written as a charge or poling pattern corresponding to the data in the ferroelectric layer 1 in co-operation with electron beam scanning. In reading out the data, an electron beam current conforming to the charge pattern is detected by scanning the ferroelectric layer 1 with an electron beam.

The recording device further comprises an evacuated glass tubular member 5, and a target 7 which forms the recording medium disposed on the inner surface of a face plate 5f. The potential setting means 3 which comprises a mesh electrode is disposed opposite to the target 6. An electron gun 9 is disposed opposite to the target 6 beyond the mesh electrode.

The electron gun 9 may, for example, comprise a cathode K and first to third grids G1 to G3 arranged sequentially. A focusing coil 10 and a deflecting coil 11 are respectively disposed outside the tubular member 5 for focusing an electron beam 12, which is emitted from the electron gun 9, on the ferroelectric layer 1 of the target 6, and scanning the ferroelectric layer 1 horizontally and vertically.

Referring particularly to Figure 2, the recording medium is formed of a Ni-Cr heater having a thickness of, for example, 1 x 10⁻⁴ mm evaporated to form the heating means 4 on one surface of an insulating substrate 7 which is composed of alumina or the like and has a thickness of 30 µm.

On the other surface of the substrate 7, the electrode 2 is formed by evaporating Cr-Au or the like to a thickness of 1 x 10⁻⁴ mm.

The electrode 2 is spin-coated with a layer of ferroelectric material such as PbTiO₃-PbZrO₃, for example, by a so-called sol-gel process and, by subsequent baking at 700°C or so, a ferrodielectric layer forming the ferroelectric layer 1 is formed with a thickness of 1 µm.

The target 6 has an area of, for example, 5 x 5 cm². The target 6 is held by a support means 8 such as a strut on the face plate 5f, in such a manner that the side with the ferroelectric layer 1 is opposed to the electron gun 9.

The heating means 4 applies heat to the ferroelectric layer 1. The energy required for heating the target 6 of a volume of 5 x 5 x 0.0033 cm³ to cause a temperature rise of 100°C is about 25 Joules, since the specific heat is 3 Joule/cm³·deg. Therefore, the required heating time is 1 second if the heating means 4 has a power of 25W, and the heating time becomes 100 milliseconds when the power is 250W.

The operation will now be described.

The voltage V_{M} applied to the potential setting means 3 is basically changeable to three values of V_{MO}, V_{M1} and V_{MS}. Denoted by SW1 in Figure 2 is a mechanical switch illustrating how the voltage applied to the potential setting means 3 is selectively switched. In this example, the potential V_{MO}, V_{M1} or V_{MS} is applied when a movable contact connected to the potential setting means 3 engages a fixed contact S₁₀, S₁₁ or S_{1S}, respectively.

Meanwhile a predetermined potential V_{T} is applied to the electrode 2. When a movable contact of a switch SW2 engages its fixed contact S₂₁, the voltage V_{T} (for example 500 V) is applied; and when the movable contact engages another fixed contact S₂₂, an output with a voltage drop due to a resistor R is obtained from a terminal tₒᵤₜ.

In a data writing mode where the switch SW2 engages the contact S₂₁ for application of the predetermined potential V_{T} to the electrode 2, the voltage V_{M} to the potential setting means 3 is so changed that two potentials V_{M0} and V_{M1} corresponding respectively to "0" and "1" of the data to be recorded are applied through selective connection to the contacts S₁₀ and S₁₁ of the switch SW1. The two values V_{M0} and V_{M1} of the potential V_{M} applied to the means 3 are, for example, V_{M0} = 495 V and V_{M1} = 505 V.

Suppose now that the contact S₁₀ is selected in the switch SW1, the voltage V_{M} applied to the means 3 is V_{M0} (495 V), and the electron beam 12 from the electron gun 9 is caused to bombard the ferroelectric layer 1. Then, if the secondary electron emissivity δ of the ferroelectric layer 1 is greater than unity in the state where the accelerated electron beam bombards the ferroelectric layer 1, secondary electrons are emitted from the ferroelectric layer 1, and these secondary electrons are caught by the potential setting means 3, so that the surface potential of the ferroelectric layer 1 becomes more positive in accordance with emission of the secondary electrons. On occurrence of this raised value at the potential V_{M0} (495 V) of the potential setting means 3, the secondary electrons are no longer caught by the potential setting means 3, so that emission of the secondary electrons is suppressed, whereby the surface potential V_{B} of the ferroelectric layer 1 is balanced at 495 V. As a result, in the ferroelectric layer 1, the potential V_{A} on the electrode 2 side is V_{T} (500 V) while the surface potential V_{B} is changed to V_{M0} (495 V). Consequently, there is caused the following potential difference in the direction of its thickness.

${\text{V}}_{\text{A}} {\text{- V}}_{\text{B}} \text{= (500 - 495) V = 5 V (1)}$

If the ferroelectric layer 1 has a thickness of 1 µm, a high electric field is applied with a field intensity of 5 V/µm = 5 kV/mm in the thickness direction. When such a high electric field is applied to a ferroelectric substance, as well known, there occurs a poling phenomenon with an array of spontaneous polarization, and the poling P₀ is stored eventually to record data "0", for example.

Due to a similar phenomenon, when the contact S₁₁ is selected in the switch SW1, and the voltage V_{M} applied to the means 3 is V_{M1} (505 V), the surface potential V_{B} of the ferroelectric layer 1 becomes equal to V_{M1} (505 V), whereby the following potential difference is caused in the direction of its thickness:

${\text{V}}_{\text{A}} {\text{- V}}_{\text{B}} \text{= (500 - 505 V) = -5 V (2)}$

As a result, poling P₁ directionally reversed relative to the recording state of the aforesaid data "0" is generated eventually to record data "1" for example.

Therefore, if the voltage applied to the means 3 is modulated with "0" or "1", that is the data to be recorded, in dependence on the scanning position of the electron beam on the ferroelectric layer 1, that is, if the potential V_{M0} or V_{M1} is applied selectively to the potential setting means 3, then either of mutually reverse poling patterns P₀ and P₁ can be produced in the ferroelectric layer 1 to write binary "0" or "1" therein.

The data "0" and "1" thus written are read out in the following manner.

In a data reading mode, the switch SW1 is actuated to select the contact S_{1S} for applying a predetermined potential V_{MS} to the potential setting means 3, while the switch SW2 is actuated to select the contact S₂₂ for applying to the electrode 2 the same potential V_{A} (500 V) as the value in the writing mode. The potential V_{MS} is intermediate between V_{M0} and V_{M1} and is assumed here to be 500 V which is equal to the potential V_{T} of the electrode 2. In this case, if the surface charge obtained in the writing mode exists on the surface of the ferroelectric layer 1, the electron beam 12 is repelled from the portion of the ferroelectric layer 1 where the surface potential V_{B} thereof in the writing mode is equal to V_{M0} (495 V) which is lower than the potential V_{MS} (500 V) of the potential setting means 3, so that the beam current does not flow therein, and flows in the other layer portion where the potential V_{B} is equal to V_{M1} (505 V). Consequently, in accordance with the potential pattern of "0" or "1" recorded on the surface of the ferroelectric layer 1, an output corresponding to "0" to "1" is obtained from the terminal tₒᵤₜ.

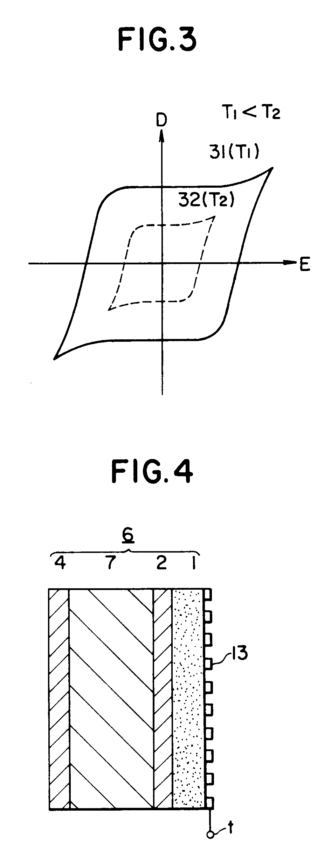

However, the charge pattern formed by the potential pattern on the surface of the ferroelectric layer 1 may be extinguished if the data are read out with the electron beam once or several times. To prevent this, pyro-electric effect is utilized in reading out the recorded data repeatedly. In a ferroelectric substance, as shown in Figure 3, where a solid line curve 31 and a broken line curve 32 respectively represent the characteristic of the dielectric flux density D relative to the electric field E at different temperatures T1 and T2 (T1 being less than T2), such D-E characteristic varies depending on the temperature in such a manner that the dielectric flux density D becomes lower with rise in temperature. Supposing now that the heating means 4 is energized to heat the ferroelectric layer 1 to a desired temperature of, for example, 50°C higher than room temperature, then the charge is induced by the pyro-electric effect. A latent image of the charge is formed in accordance with the direction of the poling P₀ or P₁ corresponding to the recorded data, so that the data can be read out again with the aforementioned electron beam scanning. Thus, it becomes possible to read out the recorded data repeatedly by utilizing the pyro-electric effect, which is achieved by energizing the heating means 4 in the reading mode to hold the data.

In an overwriting mode for rewriting the data, the aforementioned writing operation is similarly performed on the basis of the new data, so that the poling array based on the preceding data is replaced with the poling array based on the new data.

In the structure described above, the following recording density is achieved.

In relation to the pyro-electric constant P of the ferroelectric layer 1, the recording area (electron-beam spot area) S and the temperature rise ΔT, the pyro-electric charge Q is expressed as:

$\text{Q = P · S · ΔT (3)}$

Assuming now that the ferroelectric layer 1 is composed of a ceramic material such as PbTiO₃-PbZrO₃, the pyro constant is given by:

$\text{P = 2.5 x 10⁻⁸ C/cm²·deg}$

Under the condition of 5 x 10⁻¹⁵ C (coulomb) with the signal-to-noise ratio 26 dB, the detectable level is calculated from equation 3 as:

$\text{S· Δ T = Q/P = 2 x 10⁻⁷ cm²·deg}$

Since the value of S· ΔT remains constant, the temperature rise ΔT increases with reduction of the spot area. Meanwhile the temperature rise ΔT in practical use is determined by limitation in the Curie point of the ferroelectric layer 1, and restriction in the power of the heating means 4. The individual values are listed in Table 1 below with reference to a spot φ.

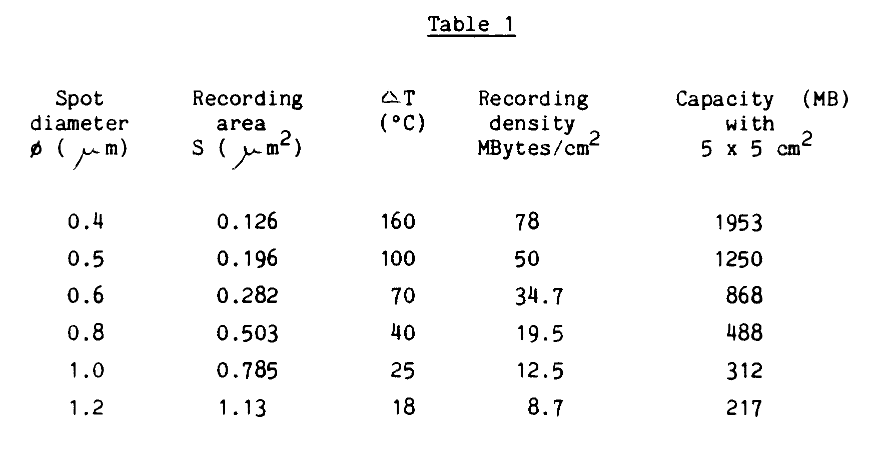

In Table 1, 1 Byte is compdiameterosed of eight bits.

The access time is determined by the electron beam positioning time, with the exception of the time required for initial heating. The required heating time, which is dependent on the value of ΔT, is about 100 milliseconds if ΔT is 100°C and the heating means 4 has a power of 250 W.

The transfer rate is determined by the electron-beam scanning time alone.

Since the charge pattern may be extinguished when the data are read out once or several times as mentioned, there is adopted in the above embodiment the procedure of cooling the ferroelectric layer 1 and then heating it again. However, for enabling repeated reading of the data by heating the ferroelectric layer 1 once only, a modification may be adopted, as illustrated in Figure 4, of providing striped parallel electrodes 13 disposed on the ferroelectric layer 1, and an output terminal t led out therefrom. In a data writing mode, the operation is performed in the same manner as mentioned previously; whereas in a data reading mode, the electron beam incident upon the electrodes 13 is modulated by the potential corresponding to the recorded data on the surface of the ferroelectric layer 1, so that a signal current representing the recorded data can be obtained. In this case, the charge on the surface of the ferroelectric layer 1 is preserved without any change and can therefore be read out repeatedly.

## Claims

1. An electron beam addressible recording device comprising:
a recording layer (1) formed of ferroelectric material;
an electrode (2) disposed on one surface of said recording layer (1); and
potential setting means (3) for setting the other surface of said recording layer (1) at potentials corresponding to data to be recorded upon scanning said other surface by an electron beam;
characterized by:
said ferroelectric material having a secondary electron emissivity δ greater than unity; and
said potential setting means (3) comprising a mesh electrode (3) facing said other surface, and means (SW1) selectively to apply potentials corresponding to said data to said mesh electrode (3) whereby on scanning said other surface by said electron beam potential differences occur between said surfaces of said recording layer (1) resulting in poling of said ferroelectric material in directions corresponding to said data.

2. A device according to claim 1 comprising:
a vacuum chamber (5) containing therein said recording layer (1); and means (SW2) for applying a predetermined potential to said one surface of said recording layer (1).

3. A device according to claim 1 or claim 2 further comprising means (4) for heating said recording layer (1).

## Patentansprüche

1. Aufzeichnungsvorrichtung, die mittels eines Elektronenstrahls adressierbar ist, mit:
einer aus ferroelektrischem Material ausgebildeten Aufzeichnungsschicht (1),
einer auf der einen Oberfläche der Aufzeichnungsschicht (1) aufgetragenen Elektrode (2),
und
einer Potentialeinstelleinrichtung (3), um auf der anderen Oberfläche der Aufzeichnungsschicht (1) durch Abtasten dieser anderen Oberfläche mittels eines Elektronenstrahls, ein Potential einzustellen, das aufzuzeichnenden Daten entspricht,
dadurch gekennzeichnet,
daß das ferroelektrische Material eine sekundäre Elektronenabgabefähigkeit δ aufweist, die gößer als eins ist, und
daß die Potentialeinstelleinrichtung (3) eine der anderen Oberfläche gegenüberliegende Gitterelektrode (3) und eine Vorrichtung (SW1) aufweist, die entsprechend den Daten selektiv Potentiale, der Gitterelektrode (3) zuführt, wobei durch das Abtasten der anderen Oberfläche mit dem Elektronenstrahl Potentialdifferenzen zwischen den Oberflächen der Aufzeichnungsschicht (1) auftreten, wodurch das ferroelektrische Material in den Daten entsprechenden Richtungen gepolt wird.

2. Vorrichtung nach Anspruch 1 mit einer Vakuumkammer (5), in der die Aufzeichnungsschicht (1) enthalten ist, und einer Vorrichtung (SW2), um der einen Oberfläche der Aufzeichnungsschicht (1) ein vorbestimmtes Potential zuzuführen.

3. Vorrichtung nach Anspruch 1 oder Anspruch 2, mit einer Vorrichtung (4) zum Heizen der Aufzeichnungsschicht (1).

## Revendications

1. Dispositif d'enregistrement adressable par faisceau d'électrons comprenant :
une couche d'enregistrement (1) réalisée en un matériau ferro-électrique ;
une électrode (2) disposée sur une surface de ladite couche d'enregistrement (1) ; et
un moyen d'établissement de potentiel (3) pour établir l'autre surface de ladite couche d'enregistrement (1) à des potentiels correspondant à des données qui doivent être enregistrées suite à un balayage de ladite autre surface par un faisceau d'électrons ;
caractérisé par :
ledit matériau ferro-électrique qui présente une émissivité d'électrons secondaires δ supérieure à l'unité ; et
ledit moyen d'établissement de potentiel (3) qui comprend une électrode à mailles (3) qui fait face à ladite autre surface et un moyen (SW1) afin d'appliquer de façon sélective des potentiels correspondant auxdites données à ladite électrode à mailles (3) d'où il résulte que lors d'un balayage de ladite autre surface par ledit faisceau d'électrons, des différences de potentiel se produisent entre lesdites surfaces de ladite couche d'enregistrement (1) ce qui conduit à polariser ledit matériau ferro-électrique suivant des directions correspondant auxdites données

2. Dispositif selon la revendication 1 comprenant :
une chambre à vide (5) qui contient à l'intérieur ladite couche d'enregistrement (1) ; et
un moyen (SW2) pour appliquer un potentiel prédéterminé à ladite surface considérée de ladite couche d'enregistrement (1).

3. Dispositif selon la revendication 1 ou 2, comprenant en outre un moyen (4) pour chauffer ladite couche d'enregistrement (1).
